# EUROPEAN PATENT APPLICATION

(11) **EP 2 267 514 A1**
(43) Date of publication of application: **29.12.2010**
(21) Application number: 09008310.6
(22) Date of filing: 25.06.2009
(51) Int. Cl.: G02C 7/12

(54) **Eyewear for laptop usage in bright environments**

(71) Applicant: Silkway Technology AG, 6340 Baar (CH)
(72) Inventor: Öhrvall, Andreas, 75322 Uppsala (SE)

(57) **Abstract**

The light from LCD displays is polarized and by rotating the polarization in polarized sunglasses to orthogonally match the LCD display, 50% of the randomly polarized background light is blocked while 100% of the light from the LCD display enters the eye.

## Description

The invention is a special kind of eyewear for LCD screens in bright environments such as sunlight.

The number of laptops and netbooks in the world is increasing at a very high rate. This also means that the number of people that want to use a laptop outdoors is also increasing. However, one important reason why this trend is held back is the fact that it becomes very difficult to read the screen while in a very bright environment and it requires significant battery power to sustain a higher laptop screen brightness.

Today the vast majority of laptop screens are made using LCD technology. Producers of laptops and LCD screens have found different ways to increase the brightness of LCD monitors. Those LCD screens are more expensive to produce and consume more electricity then regular LCD screens.

Another approach to make it possible to use regular LCD screens in bright environments is to block light that does not originate from the laptop before entering the eyes of a user watching the LCD screen. When less light in total enters the eye it is easier to see the laptop screen. Today there are types of eyewear available which limit the light intake to the eye to the center of the visual field. This is done by making the outer parts of the eyewear non-transparent or almost non-transparent.

The objective of the present invention is to provide a pair of sunglasses that makes it easier to see a regular LCD display but still look and behave very similar to regular sunglasses and reduce the need to completely or almost completely block light in the outer part of the visual field.

This objective is achieved by the pair of glasses as defined in the appended claims.

The eyewear according to the present invention comprise at least one polarized lens which blocks light essentially 45 or 90 degrees from the horizontal line.

The horizontal line is defined in this document to the line in the lenses of the eyewear which is parallel with the ground when someone is wearing the eyewear and looking towards the horizon without leaning the head.

For technical reasons the light from most LCD displays is polarized in one dimension. Most light in outdoor environments is polarized randomly. By creating a pair of sunglasses that completely block light which is orthogonally polarized to the light that LCD displays emits, it is possible to block 50% of the randomly polarized light but still let 100% of the light from the LCD display enter the eye.

There are several ways to construct lenses for glasses and sunglasses which block polarized light. It is not important for this invention which technique is used. From hereon those lenses are called polarized lenses.

Glasses with polarized lenses on the market today are either used to block glares or to simulate a 3d effect.

In most environments, glare is light which is polarized close to a plane parallel to the horizontal line in the eyewear when the light enters the glasses. Therefore both lenses in the eyewear block light polarized in this plane, in order to remove the glare.

It is possible to simulate a 3d image by projecting two different images to the two eyes. One way to accomplish this is to project two images with light waves polarized orthogonally to each other. The person who wants to experience the 3d effect wears glasses with polarized lenses also polarized orthogonally to each other and therefore giving one picture to one eye and the other picture to the other eye.

Many LCD screens for laptops have the light polarized at a 45 degree angle, either clockwise or anti-clockwise from the horizontal line when the laptop is placed on a flat surface. By polarizing lenses in sunglasses orthogonally to this angle it is possible to reduce the general intake of light into the eye but still get 100% of the light from the LCD screen. This means that the LCD screen of the laptop becomes very clear even in strong sun light while wearing those sunglasses..

Since there are two different main variations of angle of polarization of LCD monitors for laptops, the solution to the problem is to produce two or more pairs of interchangeable lenses with different polarization so that the user picks the one that fits his laptop and installs them in the frames.

According to a first embodiment of the invention, the pair of glasses comprises at least one lens which is blocking light essentially 45 degrees clockwise or anticlockwise from the horizontal line. This embodiment is especially suitable in case of usage together with an LCD screen emitting light which is polarized 45 degrees from the horizontal line.

According to a second embodiment of the invention, the pair of glasses comprises at least one lens which is blocking light essentially 90 degrees from the horizontal line. This is especially useful for LCD screens are emitting light in a plane that is parallel to the horizontal line.

Preferably, both lenses are blocking light with the angles above.

However, it is also possible to provide the pair of glasses with one single lens for both eyes.

## Claims

1. A pair of eyewear adapted for LCD display usage comprising at least one polarized lens which is blocking light essentially 45 or 90 degrees from the horizontal line.

2. A pair of eyewear according to claim 1 comprising two polarized lenses which are blocking light essentially 45 or 90 degrees from the horizontal line.

3. A pair of eyewear according to claim 1 comprising one single polarized lens adopted to cover both eyes of a user when utilized.

4. A pair of eyewear according to any of the preceding claims wherein said lens is interchangeable.
